# EUROPEAN PATENT APPLICATION

(11) **EP 3 542 632 A1**
(43) Date of publication of application: **25.09.2019**
(21) Application number: 17872089.2
(22) Date of filing: 16.05.2017
(51) Int. Cl.: A23B 7/015, A23L 5/20

(54) **SYSTEM AND METHOD FOR NEUTRALIZING PESTICIDES OR SIMILAR AGENTS CONTAINED IN FOODSTUFFS AND STRUCTURAL ARRANGEMENT FOR IMPLEMENTING SAME**

(30) Priority: 17.11.2016 BR 102016026848
(71) Applicant: Duvoisin, Charles Adriano, 89280-043 Sâo Bento do Sul - SC (BR)
(72) Inventor: Duvoisin, Charles Adriano, 89280-043 Sâo Bento do Sul - SC (BR)
(74) Representative: Elzaburu S.L.P.
(86) International application number: PCT/BR2017/050115
(87) International publication number: WO 2018/090110

(57) **Abstract**

The system and method for neutralizing pesticides or similar agents contained in foodstuffs and structural arrangement for implementing same relates to a system and method, as well as equipment for neutralizing pesticides or similar agents found inside or on the outside of contaminated foodstuffs; developed to address the problems caused by the frequent and abusive use of chemicals in agriculture, more commonly known as pesticides, as well as the problems caused by heavy metals contained in foodstuffs and other similar agents. The invention is intended to neutralize such pesticides present both on the surface and inside foodstuffs, given that there are already known solutions that neutralize these pesticides only superficially, and that do not effectively neutralize same inside the foodstuffs. The proposed solution uses a system comprising a recipient that creates an electron trap, resulting from the arrangement of electrodes and ceramic coatings between these electrodes, combined with magnetic and electromagnetic fields, and the photoelectric effect, arranged about the periphery of said recipient, the specific combination of these principles providing an innovative electron-concentration system, like a kind of electrical capacitor storing electrical energy, acting on the superficial and internal ionization and neutralization of the pesticides and similar agents present in the foodstuffs.

## Description

This application is related to a system and method for neutralizing agrochemicals or similar agents found on the inside or outside of contaminated foodstuffs, by means of an electron trap combined with magnetic and electromagnetic fields, as well as the photoelectric effect, in order to nullify harmful effects to human health related to the use of these chemicals.

On November 31, 2011 we reached the mark of 7 billion people in the world. It is estimated that in November 2016, there were already 7.463 billion people in the world, which shows a maintained accelerated pace of population increase. This phenomenon brings about numerous consequences to the world in which we live, most of which are negative, for example, pollution produced by individuals, facilitated spread of epidemics, as well as challenges related to job generation, building of new housing complexes, and most importantly, to the production of foodstuffs to meet this demand.

Taking into account the fact that people continue to leave the countryside due to the automation of rural workforce or even their own expectations and hopes for better opportunities, there is a need for complete industrialization of the agricultural processes. This is exemplified by the automation of production steps through the use of machinery for harvesting and planting, as well as the inevitability of the use of chemicals to prepare the land and plantations and even to accelerate their development. Similarly, the need to store large quantities of foodstuffs to meet the current large demand by the population is accompanied by the need to use chemical preservatives, ever growing in quantity or aggressiveness, for effective storage.

Now, about the main problem to be solved by the solution described in this patent document: research has continuously evidenced catastrophic effects to the human body, both in the medium and long term, that frequent and abusive use of these chemicals in agriculture, more known as agrochemicals, has caused. For the sake of information, agrochemicals were originally developed with the purpose of being used as a chemical weapon for battles in the First World War, and only in 1939 did Paul Muller discover the insecticide properties of said chemical compounds. It was also discovered in the twentieth century that these chemical compounds are carcinogens, teratogenic and accumulative in the organism, which makes them responsible for 70,000 acute and chronic intoxications per year in developing countries, as well as one of the major causes of the increase of cancer cases in recent decades.

We must also consider the issue of problems caused by heavy metals contained in foods, having harmful effects to the organism along with the agrochemicals, such as mercury, lead and the like, which are commonly found in food, in significant amounts.

In the field of foodstuffs purification and agrochemical neutralization, there are known techniques for carrying out the process of cleaning chemicals, including homemade methods, for example, leaving foodstuffs to rest in an alkaline solution such as potassium bicarbonate, which will neutralize the acidic agrochemicals in the food. Vinegar can also be used to neutralize alkaline agrochemicals. However, these homemade solutions are no more than good improvised purification methods for the food surface, not touching on the main aggravating factor that is the incidence of significant amounts of agrochemicals present internally to foodstuffs, these being as harmful as those present on the surface. Thus, such improvised procedures prove ineffective.

structural dispositions related to pesticide neutralizers can be found in the state of the art, for the most part, solving problems regarding foodstuffs surface intoxication, as the aforementioned home methods, only more effective. Although differences between these priorities can be found, still the detoxification present can be considered not efficient, since foodstuffs should be purified not only superficially, but also internally, both for treatment of alkaline pesticides and acidic pesticides, or even heavy metals.

Thus, we would like to mention, in the first place, the content presented in the patent document PI0306890-0, which refers to a surfactant product formulated for superficial removal of agrochemicals in fruits and vegetables, which is basically a chemical solution similar to a detergent, but focused on the removal of agrochemicals from the surface of fruits and vegetables. The process involves soaking the foodstuffs in a solution containing the surfactant product or rubbing the foodstuffs with a sponge containing the product. Soon after, they are wiped to remove the residues by forming micelles.

We can also mention the patent document CN104412815 which describes another type of superficial cleaning of foodstuffs through the use of electrolysis water, which is obtained through passing an electric current through the water. This application is also known as deionized water, which is responsible for purification through the total removal of present ions. It is also used in order to reduce or abandon chemical fertilizers during plant growth. Electrolysis water aids in plant growth and productivity, however it has already proved to be an inefficient method for insect control, thus influencing in the necessary amount of agrochemical used.

Moreover, we can cite patent document KR20140020512 which refers to a device for removal of residual pesticides, sterilization and extension of foodstuffs freshness. This method involves ozone microbubbles that are produced and diffused in the water wherein the foodstuffs is contained for the process of washing. Then pesticide residues are oxidized and decomposed by hydroxyl radicals (OH- / Free Radicals), which are produced when the ozone microbubbles burst.

In addition, we can cite the patent document CN105707660 which refers to an equipment for degradation of pesticide residues in fruits and vegetables based on magnetization of water and also on electrolysis technology. The equipment comprises a magnetized and electrolyzed water producing device and a body for pesticide degradation. The degradation body comprises a chain conductor and numerous suspended cages to position the fruits and vegetables beneath the rail of the chain conveyor. The equipment also has numerous tanks and machines containing water, magnetized water, acidic water, among others. This solution does not result in a continuous and effective effect of agrochemical neutralization.

In addition, we can cite the patent document CN103932358 which refers to a fruit and vegetable purifying machine that comprises a water tank and uses the concept of electrolysis for foodstuffs purification. At least one electrolyzed unit is placed in a water tank. These electrolyzed units comprise at least a pair of negative electrodes, known as cathode, and positive, known as anode, and are responsible for supplying electricity from the negative electrode to the positive electrode, resulting in electrolyzed water and, consequently, purified food. The water tank for cleaning has an internal ultrasonic transducer, which are devices that transform a type of energy and ultrasound waves. Thus, with this mechanism the process of foodstuffs cleaning takes place. Therefore, this equipment does not present an effective and lasting effect, since electrolysis alone only involves a temporary polarization effect.

We can also cite the patent document CN201239044 which refers to a utility model related to foodstuffs purification, which comprises a water tank, a tank for pumping water and also a generator of water electrolyzed and saturated with salt. This is superficial purification, as already explained.

Another patent document that we can mention is CN204217798 which refers to a production line for pesticide removal and sterilization of fruits and vegetables. The production line has a few tanks, the first tank being responsible for the washing off impurities, the second tank for storage of alkaline water, the third tank for washing with pure water, the fourth tank also for washing, but with acidic water, a fifth tank to store the extracted preservatives, a thermal machine and a foodstuffs packaging machine.

However, being knowledgeable of the relevant priorities of the state of the art that refers to neutralizers, one can verify the existence of several structural arrangements and methods, such as the aforementioned documents, but most of them focus on superficial purification of contaminated foodstuffs, based on the effect of electrolysis and magnetics, as well as other chemical agents, such as salt, detergent and others. Additionally, none of these are fully effective within their purpose, especially when considering agrochemicals found in the internal part of the food. These priorities also fail to provide continuous and lasting efficacy. As it were, such procedures do cause neutralization effects, but only in a superficial way, forming unstable ions or weak chemical reactions, which may be reversed within the human organism. That is to say, such effects are not long-lasting. Add this to the fact that it does not resolve the issue regarding neutralization of pesticides, agrochemicals, heavy metals and similar agents present internally to foodstuffs.

The object presented in this description consists of a system, method and structural arrangement of a neutralizer of agrochemicals contained in foodstuffs contaminated by these pesticides in order to nullify their harmful effects on human health. It is the result of a post-doctoral thesis project by the University of Coimbra, Portugal. The neutralizing system described in this patent document was designed to eliminate the alkaline and acidic agrochemicals contained in both the superficial part of the food and the inner part. It may also be applied in production lines, that is, following the use of agrochemicals for plant growth and protection, these foodstuffs may be sent to the neutralizer and then off for commercialization. Additionally, it can be made available to the market as an equipment, which may be suitable for home use prior to foodstuffs consumption, or even to supermarkets, where the device would be used before supplying foodstuffs to the shelves. Thus, the neutralizer can be adapted to any of the situations cited above, needing only changes in size, batch size and other factors which are commonly adjusted. Enabling the equipment to be adapted for domestic use allows for a cheap, compact and inexpensive product and thus opens up a broader market presence possibility for the product.

The food agrochemicals neutralizing agents described in this patent specification results in neutralization of harmful agents in residual agrochemicals, there being no addition of chemicals to the food, due to the neutralization method developed. In addition, the proposed system and method preserves the organoleptic properties of food, which relate to color, luster, flavor, odor, texture and other intrinsic characteristics of food. Due to the magnetic effects that the system presents for the purification of food, it is able to remove existing heavy metals from the food.

A characteristic of the object described in this patent document is the neutralizing system for agrochemicals contained in food, by means of electron trap, together with prior polarization of the molecules, through magnetic and electromagnetic physical action, as well as the use of photoelectric effects. It is characterized by the use of a specific assembly of these principles, resulting in an innovative electron concentrator system, as a kind of electrical capacitor, for electrical energy storage, acting on the ionization and neutralization of agrochemicals and similar agents.

The solution developed results in a process of effective and lasting foodstuffs neutralization, since it acts superficially and internally in a continuous and intense way, generating lasting and effective results. It is characterized by comprising a pair of electrodes, connected to each other and fed by a source, an insulated container being disposed between the electrodes, preferably closed, capable of retaining the electrons inside it, with at least one polarizing element being disposed peripherally to the electrodes, and an electrical conductive fluid being provided internally to the insulated container, which acts as an electrolyte medium and where foodstuffs is disposed to be neutralized by the action of the electrons formed and retained internally to the insulated container, concomitantly with the polarizing action of the polarizing element which will act on polarization and ionization of the medium. The inner container acts as an electron trap between the electrodes, which functions as an electron retainer in the container; And the polarizing element, which is peripheral, acts in the creation of positive and negative ions, internally in the container, by means of magnetic, electromagnetic and photoelectric force.

The system developed enables ionization and neutralization for foodstuffs, in an effective and lasting way. The following figures, together with the detailed description, will aid in understanding how the system operates and will evidence the object claimed in this document.

Figures 1A and 1B show, in a representative way, a side view of embodiments of the proposed system.

Figure 2 shows representatively, another embodiment of the proposed system, which is a production line.

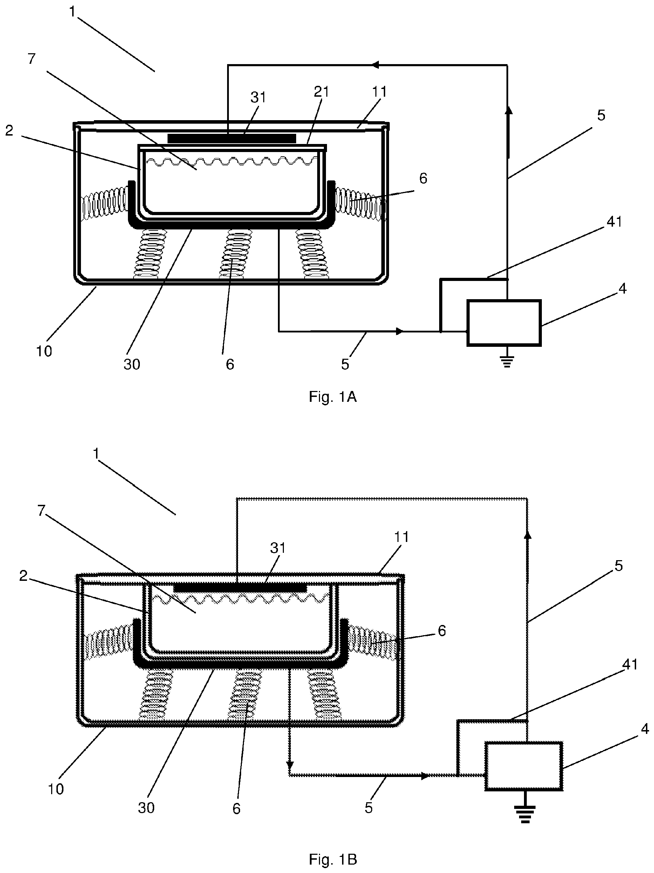

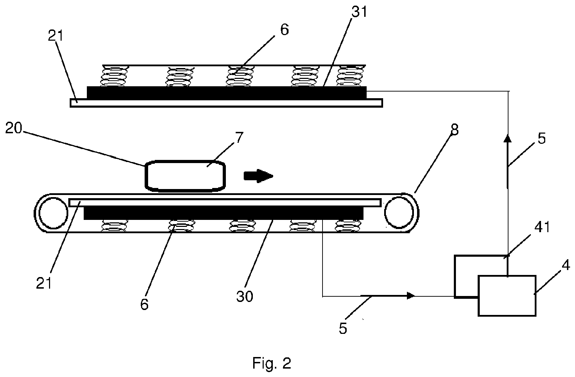

Considering the figures presented, the neutralizing system (1) for agrochemicals must include a pair of electrodes, connected to each other and fed by a high voltage source (4), an insulated container being disposed between the electrodes (30, 31), preferably closed, capable of retaining the electrons inside it, with at least one polarizing element (6) being disposed peripherally to the electrodes (30, 31), and an electrical conductive fluid (7) being provided internally to the insulated container, which acts as an electrolyte medium and where foodstuffs is disposed to be neutralized. Figures 1A and 1B illustrate an embodiment comprising an outer aesthetic container (10) in a shape similar to that of a pan, which has the function of protecting the entire internal structure of the apparatus; and must have a lid element (11). An electrically insulated inner container (2) is inserted internally to this outer aesthetic container (10), which can consist of different materials, such as ceramics (glass, porcelain, among others), plastics, or other compatible material. Figure 1A illustrates an embodiment having said insulated inner container (2) in the inner part of the container (10), including an equally insulated lid (21), to improve the efficiency of the system. Figure 2A illustrates an embodiment with said inner container (2) without insulation at the top, i.e. without the lid (21); this may be an alternative embodiment, but with less efficiency compared to the previous one.

The lower (30) and upper (31) electrodes are provided between the container (10) and the inner container (2) connected to a high voltage source (4), cable (5) or other compatible medium.

Peripherally and internally to the container (10), a polarizing element (6) is disposed, comprised by an assortment of magnets or electromagnets, which are also known as high-performance magnets or electromagnetic coils, with direct or alternating current. Said polarizing element (6) has the function of ionic polarization, i.e., forming ions, which facilitates the process of neutralizing residual toxins in foodstuffs, as well as attracting heavy metals, when present.

The high voltage source (4), provided in the system (1) generates power for the upper electrode (31), which combined with the lower electrode (30) generates an electron flow; said source (4) can be AC or DC; And coupled to this source(4), safety means (41) may be provided, containing elements such as a fuse, sensors, circuit breaker keys and other mechanisms for containment and prevention of any unforeseen events, such as operation while open, oscillations of power, system failures, and more.

The inner container (2) acts as an electron trap and is arranged between the electrodes (31 and 30. It must be disposed between the electrodes (30 and 31) and be made of insulating material, ceramic, polymeric, among others, in order to prevent leakage of the electrons, causing them to be retained internally to the inner container (2); The lid (21) Further improves the retention capacity of the electrons inside the inner container (2).

The polarizing element (6), is peripheral to the electrode, disposed externally to it, and disposed internally to the container (10); said polarizing element (6) aids in the creation of positive and negative ions, internally to the container; by means of magnetic, electromagnetic, or even photoelectric forces. It uses specific means for each, such as magnets, or electromagnets, or sources of UVC, etc. One or combinations thereof may be provided in the same embodiment of said system. In the case of the use of UVC sources, this is more suitable for agrochemicals, or similar agents, which are alkaline, since they act as electron dischargers. These are usually disposed by coils, or high performance magnets, peripherally to the container (10); in the case of the UVC source, or similar, it should be disposed so that its electromagnetic waves act internally to the inner container (2).

Internally to the inner container (2), the site where ionization and neutralization of foodstuffs occurs can be found, having an electrical conductive fluid (7), which acts as an electrolytic medium, and can be, for example, water, air, juices, milk and among others. Foodstuffs contaminated by agrochemicals or similar agents is immersed in this fluid, which will be neutralized by the neutralizer (1).

From the lower electrode (30) there is also an electrical cable (5) or other compatible medium that connects it to the high voltage supply source (4) with alternating current or direct current. Thus, the two electrodes (30 and 31) are connected through the electrical cable (5) in order to complete the system.

For example, the method of neutralization proposed by the system, comprises inserting foodstuffs internally to the insulating inner container (2) containing an electrolytic fluid medium, closing the container (10); connecting the high voltage source (4) for power generation and electron creation. The electrons formed internally to the inner container (2) are retained on account of the material which constitutes the inner container (2) which acts as an electron trap, causing the medium to present a large concentration of electrical energy. Concomitantly, the polarizing element (6) is triggered, either by the source (4) itself, or in the case of magnets, by the magnet's own action; acting on ionization in the internal medium.

This assembly of the high concentration of electrons with the ionization of the medium, especially in the foodstuffs to be treated, will allow for reaction with the surface of foodstuffs and penetration into its interior, as the electrons are electroconductive so as to ionize the internal molecules, neutralizing them both superficially and internally, through ionic reactions, i.e. strong bonds. This condition occurs for the vast majority of acidic agrochemicals, its ionization results in neutralization, eliminating its free radicals and negating its harmful properties.

In the case of alkaline or caustic agrochemicals and the like, said system presents a polarizing element (6) that can act by disposition of its UVC source, its electromagnetic waves acting in order to remove the excess electrons (photoelectric effect, thus neutralizing alkaline agrochemicals. Another form of neutralization for this case, using the aforementioned system, is to reverse the effect of the electron trap, causing the polarizing element (6) to remove the electrons; This technique can be achieved by the magnet itself, or electromagnet, or inversion of the current, among other methods.

For heavy metals, present in foodstuffs such as lead and mercury, these can be neutralized, or even removed using the system proposed. For removal, for example, the polarizing element (6) acts by means of magnetic attraction, where magnets or electromagnets attract heavy metals by removing them from foodstuffs; For neutralization, they are neutralized by the action of the highly ionized electrolytic medium, due to the excess of electrons present inside.

Thus, the structural arrangement proposed provides efficient neutralization both on food surface and the innermost segments thereof. Due to the assembly described above, which involves concepts of electromagnetism and the electron trap, we now have a practical and effective solution to an alarming problem, which in recent decades has been gradually causing more and more diet-related deaths.

Figure 2 illustrates another embodiment of said system, implemented in a production line. In this case, the inner container (20) can be simply employed surrounding the foodstuffs. The insulating inner container may be a coating, a package, which must contain a conductive fluid inside it, and must pass by the electrodes (30 and 31), which must be arranged peripherally around a segment (8) of the production line, this being a characteristic of the developed object, presented here, as well as the polarizing element (6) which should also be disposed peripherally to the segment (9) of the production line. In this embodiment, foodstuffs to be neutralized must be covered or protected by a container (20), which acts as the insulated inner container, which can be a package, provided that it is compatible, such as glass, plastic, or ceramic package, among others. Even still, the system can include a second insulated cover (21) acting as an electron trap, helping to retain them in the region through which the inner container passes (20). Said cover must present characteristics that will allow entry of the electrons by means of high voltage, but keep them internally retained, forming a medium with high concentration of electrons. The ionization and neutralization of agrochemicals and similar agents, contained in foodstuffs inside the cover, will occur along with the action of the polarizing element, as already explained.

## Claims

1. "SYSTEM AND METHOD FOR NEUTRALIZING PESTICIDES OR SIMILAR AGENTS CONTAINED IN FOODSTUFFS" which can be employed in production lines, or made available as an equipment or closed container, acting on neutralization of agrochemicals and the like, and on attraction of heavy metals, disposed superficially or internally to foodstuffs, **characterized by** comprising a pair of electrodes, connected to each other and fed by a source, an insulated container being disposed between the electrodes, capable of retaining the electrons inside it, with at least one polarizing element being disposed peripherally to the electrodes, and an electrical conductive fluid being provided internally to the insulated container, which acts as an electrolyte medium and where foodstuffs is disposed to be neutralized by the action of the electrons formed and retained internally to the insulated container, concomitantly with the polarizing action of the polarizing element which will act on polarization and ionization of the medium.

2. "SYSTEM AND METHOD FOR NEUTRALIZING PESTICIDES OR SIMILAR AGENTS CONTAINED IN FOODSTUFFS" according to claim 1, **characterized by** the polarizing element being magnets.

3. "SYSTEM AND METHOD FOR NEUTRALIZING PESTICIDES OR SIMILAR AGENTS CONTAINED IN FOODSTUFFS", according to claim 1, **characterized by** the polarizing element being electromagnets.

4. "SYSTEM AND METHOD FOR NEUTRALIZING PESTICIDES OR SIMILAR AGENTS CONTAINED IN FOODSTUFFS" according to claim 1, **characterized by** the polarizing element being a photoelectric device arranged so as to make its rays to internally strike the inner container.

5. "SYSTEM AND METHOD FOR NEUTRALIZING PESTICIDES OR SIMILAR AGENTS CONTAINED IN FOODSTUFFS" according to claim 1, **characterized by** the source being DC.

6. "SYSTEM AND METHOD FOR NEUTRALIZING PESTICIDES OR SIMILAR AGENTS CONTAINED IN FOODSTUFFS" according to claim 1, **characterized by** the source being AC.

7. "SYSTEM AND METHOD FOR NEUTRALIZING PESTICIDES OR SIMILAR AGENTS CONTAINED IN FOODSTUFFS", according to claim 1, **characterized by** the fact that the source provides security means containing elements such as a fuse, sensors, circuit breakers and other mechanisms for containment and prevention of any unforeseen events, such as operation while open, oscillations of power, and system failures.

8. "SYSTEM AND METHOD FOR NEUTRALIZING PESTICIDES OR SIMILAR AGENTS CONTAINED IN FOODSTUFFS" according to claim 1, **characterized by** the fact that the inner insulated container is a compatible package for foodstuffs packaging.

9. "STRUCTURAL ARRANGEMENT FOR IMPLEMENTING SAME", describes a structural arrangement for implementation of the system as described in claim 1, **characterized by** the fact that it comprises an outer aesthetic container closed by a lid and an electrically insulated inner container, as well as electrodes connected, by compatible means, to a high voltage source arranged peripherally to the insulated inner container, and the polarizing element being provided peripherally between the inner container and the electrode, and internally to the outer container.

10. "STRUCTURAL ARRANGEMENT FOR IMPLEMENTING SAME", describes a structural arrangement for implementation of the system in a production line, **characterized by** the fact that it comprises mutually connected electrodes fed by a source and peripherally to a particular segment of the production line, a polarizing element also being provided, arranged peripherally to the electrode; and wherein it comprises an insulated container, where foodstuffs is disposed, containing internally a conductive fluid that passes between said electrodes disposed in said segment of the production line.

11. "STRUCTURAL ARRANGEMENT FOR IMPLEMENTING SAME", according to claim 10, **characterized by** the fact that it comprises a second insulated coating between the electrodes.
